# EUROPEAN PATENT SPECIFICATION

(11) **EP 1 868 330 B1**
(45) Date of publication and mention of the grant of the patent: **03.03.2010**
(21) Application number: 06115616.2
(22) Date of filing: 16.06.2006
(51) Int. Cl.: H04L 12/56

(54) **Method and system for transmitting packets**
Verfahren und System zum Übertragen von Paketen
Procédé et dispositif de transmission de paquets

(43) Date of publication of application: 19.12.2007
(73) Proprietor: Research In Motion Limited, Waterloo, Ontario N2L 3W8 (CA)
(72) Inventor: Munje, Arun, Ottawa Ontario K2W 1E3 (CA)
(74) Representative: Moore, Barry

(56) References cited:
- EP-A- 1 452 988
- US-A1- 2004 162 031
- US-B1- 6 205 498
- US-B1- 6 785 283

## Description

The application relates to wireless communication, and more particularly to transmitting packets.

In some instances, a wireless device may be required to send a message that has been scheduled for transmission. Such messages may be scheduled synchronisation messages, which are transmitted on a scheduled basis for synchronising information between the wireless device and another node. Such messages are ideally transmitted according to a scheduled time, but may be transmitted earlier.

In other instances, a wireless device may be required to acknowledge receipt of a packet. Such acknowledgement takes form of an acknowledgement message sent from the wireless device to the network. When the network receives the acknowledgement message, the network is provided with a confirmation that the wireless device has received the packet. In absence of such confirmation by a predetermined time after sending the data packet, the network assumes that the wireless device did not receive the packet and will re-send the packet. An acknowledgement message may acknowledge receipt of more than one received packet. Waiting before sending an acknowledgement message may allow additional received packets to be acknowledged by a single acknowledgement message.

Packet communication to and from the wireless device is done so over a communication channel. If a wireless device is to transmit a packet, and its communication channel has been torn down, then the wireless device re-establishes the communication channel to transmit the packet. Re-establishing the communication channel consumes resources. First, establishing the communication channel consumes network resources. Second, establishing the communication channel consumes battery power of the wireless device. Third, establishing the communication channel requires time.

US2004/162031 discloses a method for a communication system to efficiently use traffic channel resources for communications of control data. A controller receives a transmission indicator of a control message. The controller selects a traffic channel dominant timer based on the transmission indicator. The transmission indicator of the control message is determined based on at least one of extent of communications and size of data of the control message between the mobile station and the base station. The controller sets up a traffic channel for transmission of the control message with the selected traffic channel dormant timer. The traffic channel is torn down after expiration of the selected traffic channel dominant timer. US 6 785 283 discloses a method for deadline based scheduling of wireless user data at a wireless device.

According to a broad aspect, the invention provides a method in a wireless device comprising: identifying a time window during which a packet must be transmitted; determining whether a communication channel is expected to be torn down during the time window based on packet traffic over the communication channel; and transmitting the packet on the communication channel at a time during the time window based on whether the communication channel is expected to be torn down during the time window.

In some embodiments, the duration of the time window may be dependent upon a first packet.

In some embodiments, the method preferably further comprises: starting a timer upon receipt of the first packet; wherein the timer is indicative of the duration of the time window.

In some embodiments, the packet transmitted may be an acknowledgement packet for acknowledging receipt of at least one previously received packet.

In some embodiments, the packet transmitted may be a synchronisation packet for providing synchronisation information to a recipient of the packet.

In some embodiments, the method further preferably comprises: determining that one of the plurality of packets is to be transmitted in lieu of another one of the plurality of packets; and removing the another one of the plurality of packets from the queue together with its respective time window.

In some embodiments, the method further preferably comprises: if the communication channel is expected to be torn down during the time window, estimating resource utilisation for transmitting the packet before and after when the communication channel is expected to be torn down; and transmitting the packet on the communication channel at some time during the time window based on the estimated resource utilisation.

In some embodiments, the method may further comprise: if the estimated resource utilisation indicates favourability in transmitting the packet after when the communication channel is expected to be torn down: a) allowing the communication channel to be torn down; b) re-establishing the communication channel late in the time window but no later than a predetermined time period before expiry of the time window; and c) transmitting the packet on the communication channel late in the time window.

In some embodiments, estimating resource utilisation preferably comprises at least one of: consideration of battery utilisation; consideration of network resources; and consideration of time required to establish the communication channel.

According to another broad aspect, there is preferably provided a computer readable medium having computer readable instructions stored thereon for execution on a wireless device so as to implement the method summarised above.

According to another broad aspect, there is preferably provided a wireless device adapted to implement the method summarised above.

According to another broad aspect, there is preferably provided a communication system comprising the wireless device summarised above.

According to another broad aspect, there is a method preferably comprising: identifying a time window during which a packet must be transmitted; establishing a communication channel late in the time window but no later than a predetermined time period before expiry of the time window; and transmitting the packet on the communication channel late in the time window.

According to another broad aspect, there is preferably a wireless device adapted to implement the method summarised above.

In some embodiments, the wireless device may comprise: a wireless access radio adapted to communication wirelessly with a wireless access network; a radio manager for managing packet transmission on the wireless access radio; and at least one application coupled to the radio manager; wherein: the at least one application provides the packet to be transmitted to the radio manager together with an indication of the time window; and the radio manager manages transmission of the packet.

According to another broad aspect, there is preferably a communication system comprising at least one wireless device summarised above.

### Brief Description of the Drawings

Preferred embodiments will now be described with reference to the attached drawings in which:
Figure 1 is a block diagram of a wireless device coupled to a network;
Figure 2 is a flow chart of an example method of transmitting a packet;
Figures 3 and 4 are timelines of example sequences of events;
Figure 5 is a signalling diagram of another example sequence of events;
Figures 6 through 8 are flow charts of an example method in an application of acknowledging receipt of packets;
Figures 9 through 13 are flow charts of an example method in a radio manager for acknowledging receipt of packets;
Figures 14 through 18 are flow charts of example methods in a radio manager of analyzing an acknowledgement queue for sending acknowledgements;
Figure 19 is a flowchart of another example method of transmitting a packet; and
Figure 20 is a flowchart of yet another example method of transmitting a packet.

### Description of Preferred Embodiments

### Wireless Device

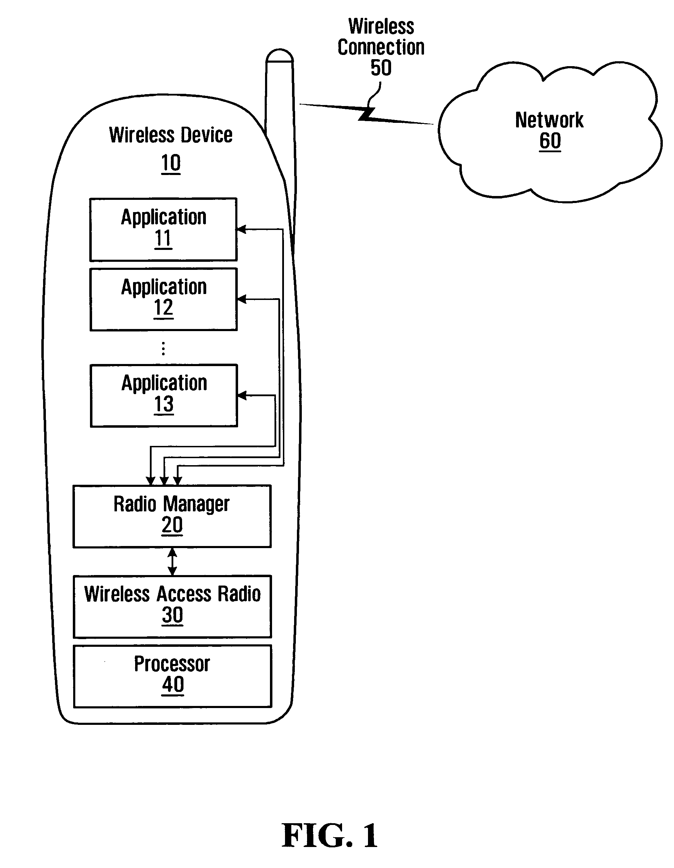

Referring now to Figure 1, shown is a wireless device 10 coupled to a network 60 through a wireless connection 50. The wireless device 10 has a plurality of applications 11, 12, 13 coupled to a radio manager 20. Although only three applications are shown, more generally, there may be any number of applications. The radio manager 20 is coupled to a wireless access radio 30. The wireless device 10 also has a processor 40. The wireless device 10 may have other components, but they are not shown for sake of simplicity.

In operation, the wireless device 10 is adapted to communicate with the network 60 via the wireless access radio 30 and the wireless connection 50. Such communication includes packet communication, and may include other forms of communication such as circuit switched communication for voice calls. Packet communication over the wireless connection 50 is by means of a communication channel, for example a physical layer traffic channel. The packet communication is in respect of the applications 11, 12, 13, which send and receive packets during operation. The radio manager 20 manages all packet communication for the applications 11, 12, 13.

In some instances, the packet communication includes transmitting packets that have been scheduled for transmission. There are many possibilities for such packets. As a first example, the wireless device 10 transmits scheduled synchronisation packets, which are transmitted according to a schedule for synchronising information between the wireless device 10 and another node. Such packets are ideally transmitted according to the schedule, but may be transmitted earlier if an earlier transmission is more favourable. As a second example, the wireless device 10 transits response packets. In some instances, when the wireless device 10 receives a packet from the network 60, the wireless device 10 is to respond to the packet by transmitting a response packet. A response packet is to be transmitted within a time window from receipt of the packet. An acknowledgement packet is an example of a response packet.

According to an embodiment of the application, when the wireless device 10 is to transmit a packet during some time window, the wireless device 10 transmits the packet at some time during the time window based on whether or not the communication channel is expected to be torn down during the time window. In some implementations, the radio manager 20 operates in combination with the applications 11, 12, 13 to accomplish this. Examples of how this may be implemented are detailed below with reference to the drawings.

There are many possibilities for the applications 11, 12, 13. The applications 11, 12, 13 may for example include an email application, an internet browser application, or a messenger application. There may be additional applications (not shown) that do not participate in packet communication. The applications 11, 12, 13 may be independently receiving packets and generating packets for transmission via the radio manager 20. In some implementations, the radio manager 20 and the applications 11, 12, 13 are each implemented as software and are executed on the processor 40. More generally, the radio manager 20 and the applications 11, 12, 13 may each be implemented as hardware, software, firmware, or any appropriate combination thereof. Although the radio manager 20 is drawn separately from the applications 11, 12, 13, in the illustrated example, it is to be understood that the radio manager 20 may be integrated with the applications 11, 12, 13.

There are many possibilities for the network 60. The network 60 may include any appropriate wireless network capable of packet transmission, for example a UMTS (Universal Mobile Telecommunications System) network, a GPRS (General Packet Radio Service) network, a CDMA (Code Division Multiple Access) network, or an EVDO (Evolution Data Only) network.

### Method for Transmitting Packets

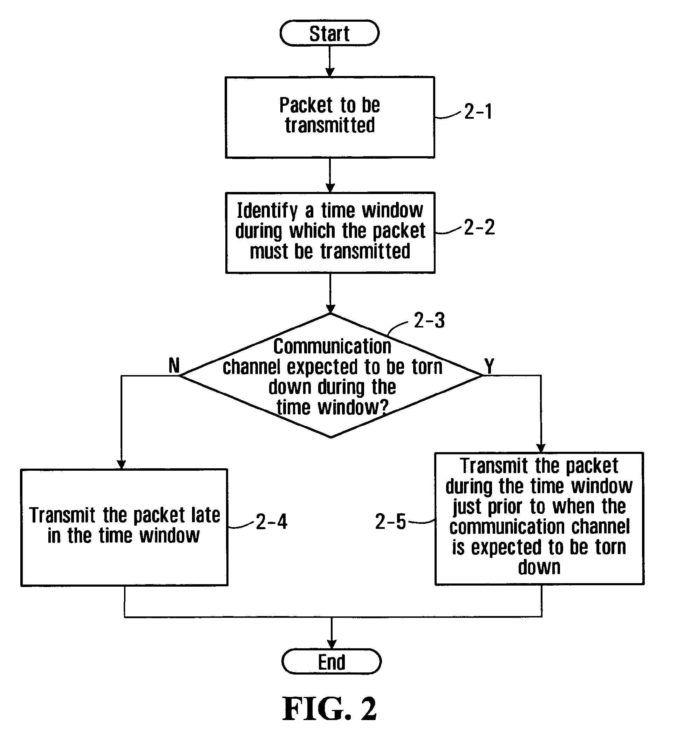

Referring now to Figure 2, shown is a flow chart of an example method of transmitting a packet. This method may be implemented in a wireless device, for example the wireless device 10 shown in Figure 1.

If at step 2-1 there is a packet to be transmitted, then at step 2-2 the wireless device identifies a time window during which the packet must be transmitted. The packet is to be transmitted late in the time window, but may be transmitted earlier if an earlier transmission is more favourable. At step 2-3, the wireless device determines whether or not the communication channel is expected to be torn down during the time window. If the communication channel is not expected to be torn down during the time window, then the wireless device transmits the packet late in the time window at step 2-4. However, if the communication channel is expected to be torn down during the time window, then at step 2-5 the wireless device transmits the packet during the time window just prior to when the communication channel is expected to be torn down. This prevents the wireless device from having to re-establish the communication channel to send the packet in the event that the communication channel is torn down.

In the illustrated example, the packet is assumed to be of a packet type that is to be transmitted late in the time window, but may be transmitted earlier if an earlier transmission is more favourable. However, in some implementations, the wireless device determines the type of the packet. If the packet is determined to be a packet type that is to be transmitted late in the time window, but may be transmitted earlier if an earlier transmission is more favourable, then the steps described above in the illustrated example are executed. However, if the packet is determined to be another packet type, then the wireless device may execute a different set of steps. Accordingly, the wireless device discriminates between other types of packets, for example packets that are to be transmitted as soon as possible. In some implementations, the application that is involved in transmitting the packet determines the type of the packet, and the time window if applicable.

There are many implementation specific ways that the wireless device may determine whether or not the communication channel is expected to be torn down. In some implementations, the radio manager determines when and if the communication channel is to be torn down based on packet traffic over the communication channel. For example, the communication channel may be torn down after a period of inactivity. Since there may be multiple applications that may be sending and receiving packets, the activity or inactivity of a single application is not determinative of channel status. For example, when the channel would nominally be torn down after a period of inactivity from a single application, the communication channel would not be torn down in a multiple application context where traffic is experienced from another application in the interim. In some implementations, if a packet is transmitted on the communication channel soon before the communication channel is to be torn down, then the tearing down of the communication channel is delayed due to the activity on the communication channel. Accordingly, in some implementations, the radio manager takes this into consideration when determining when and if the communication channel is to be torn down. In some implementations, the radio manager waits during the time window to see if the communication channel is to be torn down and becomes aware that the communication channel is to be torn down soon enough before it happens so as to transmit the packet before the communication channel is torn down. Other implementations are possible.

It is to be understood that when the communication channel is expected to be torn down during the time window that this does not necessarily mean that the communication channel will be torn down during the time window. For example, if the communication channel is expected to be torn down due to a period of inactivity and a packet is suddenly transmitted, then in some implementations the communication channel is not torn down as expected since there has been new activity.

It is also to be understood that when a packet is transmitted "late in the window" that the precise time of transmission is variable and implementation specific. In some implementations, the packet is transmitted at the last possible moment before expiry of the time window. In other implementations, the packet is transmitted when at least a predefined proportion of the time window, for example 80% of the time window, has expired. Other implementations are possible.

There are many possibilities for transmitting the packet upon determining that the communication channel is expected to be torn down during the time window. In the illustrated example, the packet is transmitted just before the communication channel is expected to be torn down. However, in other implementations, the packet is transmitted as soon as possible. In other implementations, the packet is transmitted as late as possible before the communication channel is expected to be torn down. Other implementations are possible.

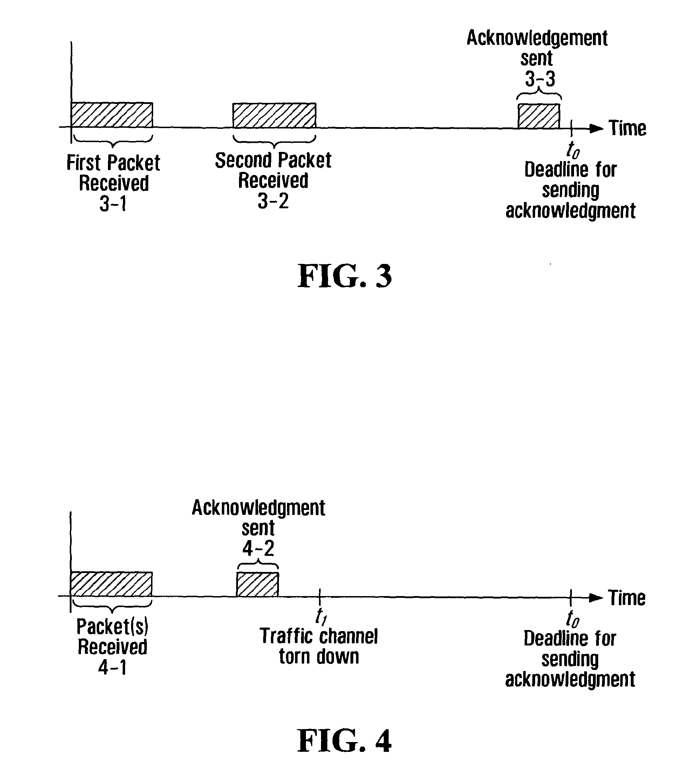

There are many possibilities for the packet transmitted in the above example. For example, the packet transmitted may be a scheduled synchronisation packet, a response packet such as an acknowledgement packet, or any other packet to be transmitted during a time window. Further details and embodiments of the method are described below with reference to Figure 3 through 18 assuming that the packet to be transmitted is a response packet. However, it is to be understood that there are many possibilities for the packet and that embodiments of the application are not limited to response packets.

### Example Sequences of Events

Referring now to Figure 3, shown as a timeline of an example sequence of events. The events in this timeline are in respect of a wireless device, for example the wireless device 10 shown in Figure 1.

At step 3-1, the wireless device receives a first packet to which acknowledgement of its receipt is expected. Receipt of the first packet is acknowledged by transmitting a response packet during a time window starting from receipt of the first packet and expiring at time=to. If the network does not receive an acknowledgment by the deadline at time=to, then the network will re-send the first packet. Therefore, missing the deadline is to be avoided as this wastes system resources. In the illustrated example, the wireless device does not send a response packet immediately after receipt of the first packet. Instead, the wireless device waits to see if additional packets are received before the deadline at time=to. During this waiting time, a second packet is received at step 3-2. At step 3-3, a single response packet is transmitted just before time=to to acknowledge receipt of both the first packet and the second packet. Transmitting a single response packet typically utilises fewer recourses than transmitting a plurality of response packets. Therefore, waiting during the time window to see if additional packets are received may reduce resource utilization when more than one packet is received and acknowledged by a single response packet.

In the above example, the wireless device waits until late in the time window to transmit the response packet. However, in other situations, the wireless does not do this. An example is provided with reference to Figure 4, which shows a timeline of another example sequence of events. The events in this timeline are in respect of a wireless device, for example the wireless device 10 shown in Figure 1.

At step 4-1, the wireless device receives one or more packets to which acknowledgement of their receipt is expected. Receipt of the one or more packets is acknowledged by transmitting a response packet during a time window starting from an earliest receipt of the one or more packets and expiring at time=to. Some time after receipt of the one or more packets, the wireless device determines that a communication channel used for transmitting packets is expected to be torn down at time=t₁. Examples of how the wireless device may determine that the communication channel is expected to be torn down have been provided above with reference to Figure 2. In view of the communication channel expected to be torn down, the wireless device does not wait until late in the time window to acknowledge receipt of the one or more packets. Instead, at step 4-2 the wireless device transmits a response packet just prior to when the communication channel is expected to be torn down. At time=t₁ the communication channel is torn down as expected. Accordingly, if the wireless device were to wait until time=to to send the response packet, then the wireless device may need to re-establish the communication channel to transmit the response packet. Therefore, by sending the response packet earlier, the communication channel does not have to be re-established to merely to send the response packet.

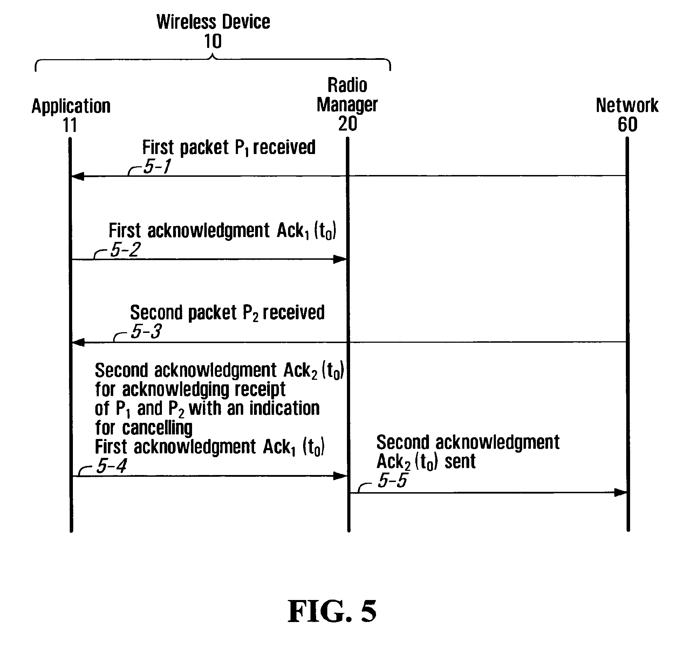

In some implementations, as shown in Figure 1, the wireless device 10 has a plurality of applications 11, 12, 13 coupled to a radio manager 20. In such implementations, there would be signalling between the applications 11, 12, 13 and the radio manager 20 during packet exchanges with the network 60. Referring now to Figure 5, shown is a signalling diagram of example signalling between the application 11 of the wireless device 10, the radio manager 20 of the wireless device 10, and the network 60.

At step 5-1, the network 60 sends a first packet P₁ to the wireless device 10. The radio manager 20 receives the first packet P₁, identifies that the first packet P₁ is intended for the application 11, and forwards the first packet P₁ to the application 11. At step 5-2, the application 11 generates a first acknowledgement Ack₁(t₀) for acknowledging receipt of the first packet P₁, and sends the first acknowledgement to the radio manager 20. The first acknowledgement Ack₁(t₀) is provided with an indication of a deadline for acknowledging receipt of the first packet P₁, namely to. The indication of the deadline is provided to the radio manager 20 so that the radio manager 20 is aware of when the time window for transmitting the acknowledgement expires. The radio manager 20 determines when the acknowledgement is to be sent during the time window based on whether or not the communication channel used for transmitting acknowledgements is expected to be torn down during the time window.

In the illustrated example, the communication channel is not expected to be torn down during the time window. Therefore, the radio manager 20 waits during the time window to transmit the acknowledgement late in the time window. During this waiting time, the network 60 sends a second packet P₂ to the wireless device 10 at step 5-3. The radio manager 20 receives the second packet P₂, identifies that the second packet P₂ is intended for the application 11, and forwards it to the application 11. It is assumed that this takes place prior to time=to. At step 5-4 the application 11 generates a second acknowledgement Ack₂(t₀) for acknowledging receipt of the first packet P₁ and the second packet P₂, and provides the second acknowledgement to the radio manager 20. The second acknowledgement Ack₂(t₀) is provided with an indication of the deadline for acknowledging receipt of the first packet P₁, namely to. The second acknowledgement Ack₂(t₀) is provided with an indication, for example a bit set, to cancel the first acknowledgement Ack₁(t₀). At step 5-5 the radio manager 20 sends the second acknowledgement Ack₂(t₀) late in the time window.

In some implementations, the acknowledgements are provided to the radio manager 20 as soon as possible so that the radio manager 20 is aware of the acknowledgements. This allows the radio manager to send an acknowledgement earlier if the communication channel is expected to be torn down before expiry of the time window.

In the illustrated example, the second acknowledgement Ack₂(t₀) is provided with an indication to cancel the first acknowledgement Ack₁(t₀). However, more generally, any appropriate indication to cancel the first acknowledgement Ack₁(t₀) may be provided by the application 11. In some implementations, receipt of the second acknowledgement Ack₂(t₀) by the radio manager 20 serves as an implicit cancelling of the first acknowledgement Ack₁(t₀). In other implementations, the application 11 provides a separate cancelling message. In some implementations, the first acknowledgement Ack₁(t₀) is cancelled at the same time as the application 11 provides the second acknowledgement Ack₂(t₀) to the radio manager 20. In other implementations, the first acknowledgement Ack₁(t₀) is cancelled just prior to the application 11 providing the second acknowledgement Ack₂(t₀) to the radio manager 20. Other implementations are possible.

Although only two packets are received in the illustrated example, it is to be understood that more or less packets may be received and acknowledged by a single acknowledgement. For example, if a third packet is received during the time window, then receipt of all three packets may be acknowledged by a single acknowledgement message.

### Method in an Application

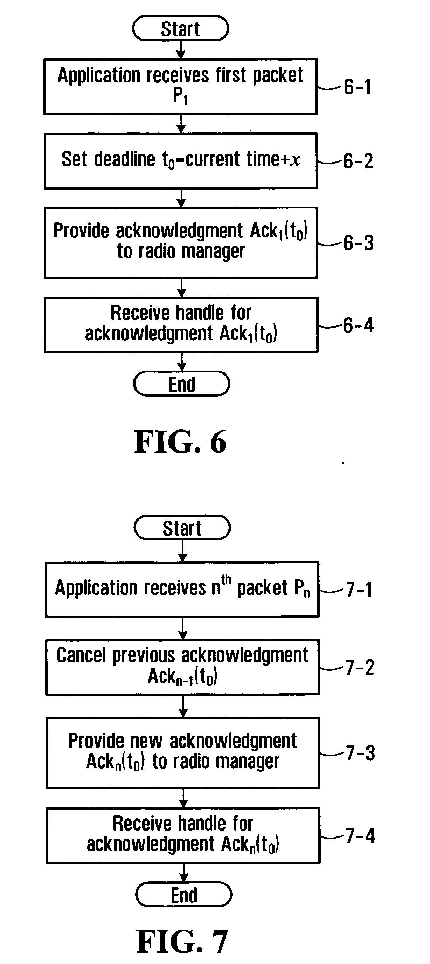

Referring now to Figures 6 through 8, shown are flow charts of an example method in an application of acknowledging receipt of packets. This method may be implemented in an application of a wireless device, for example by any one of the applications 11, 12, 13 of the wireless device 10 shown in Figure 1. It is to be understood that the method described below with reference to Figures 6 through 8 is a very specific method and is provided merely as an example.

The steps of Figure 6 are executed upon receipt of a first packet. If at step 6-1 the application receives a first packet P₁, then at step 6-2 the application sets a deadline of to = current time + x, where x denotes an amount of time that the wireless device has to acknowledge receipt of the first packet P₁. The value for x is implementation specific and may be dependent upon the packet received. At step 6-3, the application provides an acknowledgement Ack₁(t₀) to the radio manager. An indication of the deadline at time=to is provided with the acknowledgement so that the radio manager is informed of the deadline for transmitting the acknowledgement. At step 6-4 the application receives from the radio manager a handle for the acknowledgement Ack₁(t₀). The handle allows the application to reference the acknowledgement Ack₁(t₀) at a later time. This allows the application to cancel the acknowledgement Ack₁(t₀) at a later time should the application replace the acknowledgement Ack₁(t₀) with a subsequent acknowledgement Ack₂(t₀).

The steps of Figure 7 are executed upon receipt of each subsequent packet prior to the acknowledgment of the first packet. If at step 7-1 the application receives an n^{th} packet Pₙ, where n is any integer greater than 1, then at step 7-2 the application cancels the previous acknowledgement Ackₙ₋₁(t₀) using the handle received at step 6-4. At step 7-3, the application sends a new acknowledgement Ackₙ(t₀) to the radio manager. The new acknowledgement Ackₙ(t₀) is provided with an indication of the same deadline at time=to for acknowledging receipt of the first packet P₁ and all subsequent packets received of the n-packets. At step 7-4 the application receives from the radio manager a handle for the acknowledgement Ackₙ(t₀). This step is similar to step 6-4 described above.

It is possible that the wireless device will not receive every packet that has been sent to the wireless device. In the event that a packet is not received by the wireless device, the steps of Figure 7 are not executed. At some later time, when there has been no acknowledgment of the packet, the packet will be sent again to the wireless device.

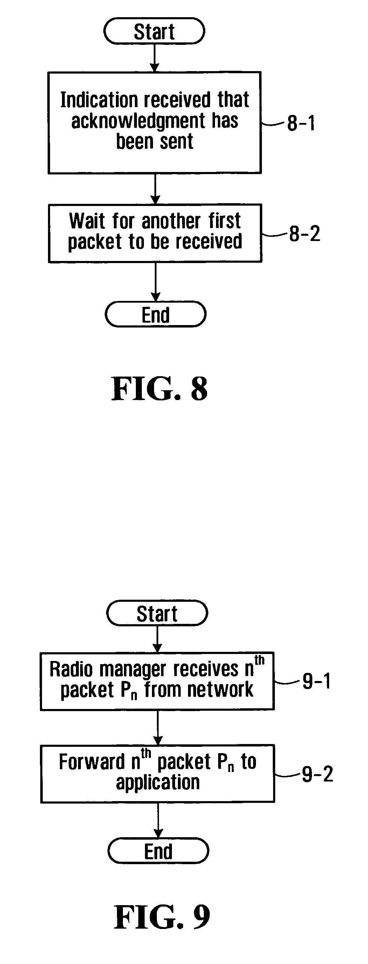

The steps of Figure 8 are executed when an indication is received from the radio manager that the acknowledgement has been sent. If at step 8-1 an indication is received from the radio manager that the acknowledgment has been sent, then at step 8-2 the application assumes that the radio manager has sent the acknowledgement to the network for acknowledging receipt of all packets received and waits until another first packet is received at step 6-1.

The deadline for acknowledging receipt of the first packet has been calculated as the sum of the current time and the time given to the wireless device to acknowledge receipt of the first packet. In other implementations, to may be equal to the time remaining for acknowledging receipt of the first packet P₁. In this implementation, to would be equal to x for the first acknowledgement Ack₁(t₀), and de-incremented for subsequent acknowledgements Ackₙ(t₀) according to how much time has passed since receipt of the first packet P₁. Accounting of times may be implemented by means of counters or timers. Other implementations are possible.

### Method in a Radio Manager

Referring now to Figures 9 through 12, shown are flow charts of an example method in a radio manager of acknowledging receipt of packets. This method may be implemented in a radio manager, for example by the radio manager 20 of the wireless device 10 shown in Figure 1. It is to be understood that the method described below with reference to Figures 9 through 12 is a very specific method and is provided merely as an example.

The steps of Figure 9 are executed upon receiving a packet from the network. If at step 9-1 the radio manager receives an n^{th} packet Pₙ from the network, where n is any positive integer, then at step 9-2 the radio manager forwards the n^{th} packet Pₙ to the application. As previously described, when the application receives a packet, it generates an acknowledgement and provides the acknowledgement to the radio manager together with an indication of a deadline at time=to for transmitting the acknowledgement.

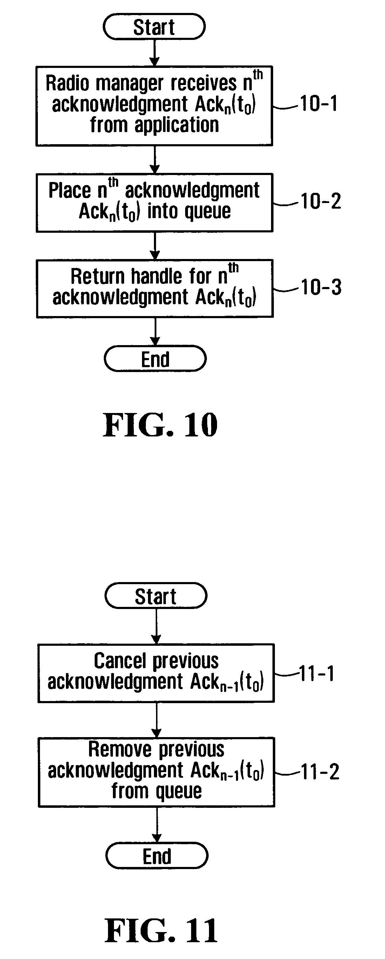

The steps of Figure 10 are executed upon receipt of an acknowledgment from the application. If at step 10-1 the radio manager receives an n^{tn} acknowledgement Ackₙ(t₀) from the application, then at step 10-2 the radio manager places the n^{th} acknowledgement Ackₙ(t₀) into a queue together with the indication of the deadline. At step 10-3 the radio manager returns a handle to the application so that the application may refer to the acknowledgement at a later time.

The steps of Figure 11 are executed upon receiving an instruction to cancel a previous acknowledgement. If at step 11-1 the radio manager is instructed by the application to cancel a previous acknowledgement Ackₙ₋₁ (t₀) using the handle provided to the application at step 10-3, then at step 11-2 the radio manager removes the previous acknowledgement Ackₙ₋₁(t₀) from the queue together with the indication of the deadline.

Since there may be a plurality of applications, each of which may be providing acknowledgements to the radio manager, the queue may have a plurality of acknowledgements to be transmitted. The queue may be implemented in any appropriate manner, for example as a data record. The queue contains an identification of each acknowledgement to be transmitted, and their respective deadlines (e.g. to) for transmitting the acknowledgement.

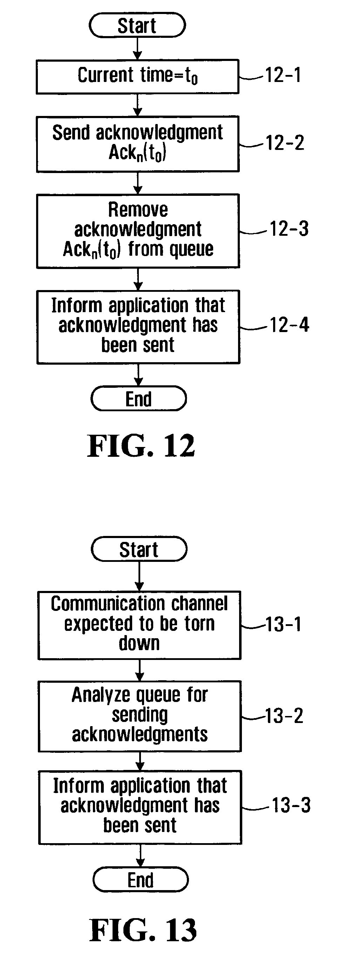

The steps of Figure 12 are implemented upon arrival of time=t₀. If at step 12-1 the radio manager determines that the current time is equal to the deadline for transmitting one of the packets in the queue, for example at time=t₀, then at step 12-2 the radio manager sends the acknowledgement Ackₙ(t₀) . In this case, the acknowledgement Ackₙ(t₀) is transmitted late in the window. At step 12-3 the acknowledgement Ackₙ(t₀) is removed from the queue together with the indication of the deadline. At step 12-4, the radio manager informs the application that the acknowledgement Ackₙ(t₀) has been sent.

The steps of Figure 13 are implemented upon determining that the communication channel is to be torn down. If at step 13-1 the radio manager determines that the communication channel is expected to be torn down, then at step 12-2 the radio manager analyzes the queue for sending acknowledgements. In this case, the acknowledgement may be transmitted earlier in the time window. For each acknowledgement sent, the radio manager informs the respective applications at step 13-3 that the acknowledgement has been sent. Upon receipt of such indication, the respective application exits at step 8-2 as described above with reference to Figure 8.

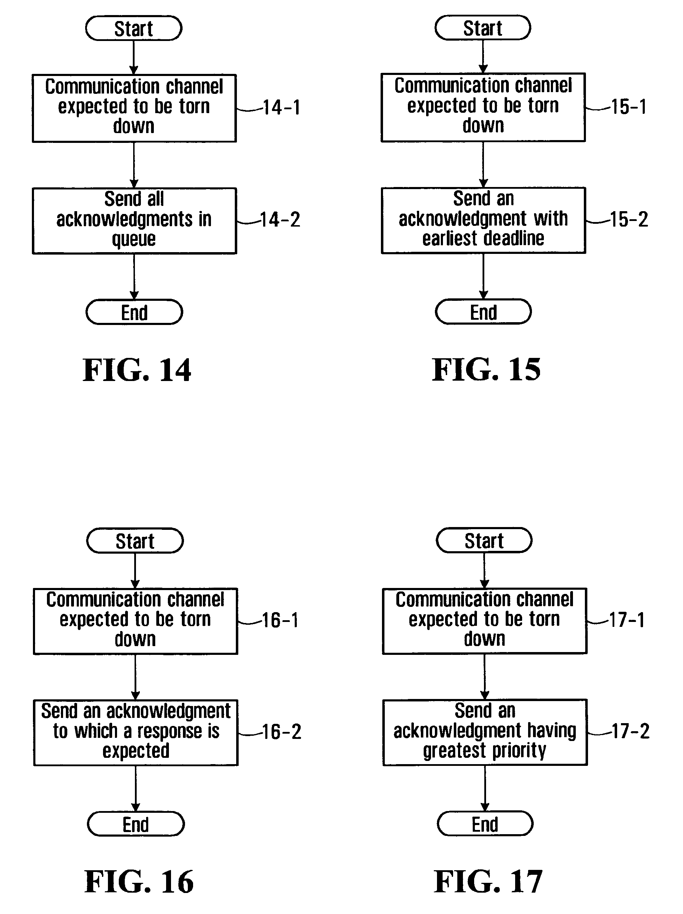

There are many ways that the radio manager can analyze the queue for sending acknowledgements. Referring now to Figures 14 through 18, shown are flow charts of example methods of analyzing the queue for sending acknowledgements. One or more of these methods may be implemented by a radio manager, for example by the radio manager 20 of the wireless device 10 shown in Figure 1.

Referring first to Figure 14, in one example, if the radio manager determines at step 14-1 that the communication channel is expected to be torn down, then at step 14-2 the radio manager sends all acknowledgements contained in the queue.

Referring now to Figure 15, in another embodiment, if the radio manager determines at step 15-1 that the communication channel is expected to be torn down, then at step 15-2 the radio manager sends only the acknowledgement in the queue having the earliest deadline.

Referring now to Figure 16, in another embodiment, if the radio manager determines at step 16-1 that the communication channel is expected to be torn down, then at step 16-2 the radio manager sends a particular acknowledgement from the queue such that the radio manager expects a response from the network upon receipt of the particular acknowledgement.

In some implementations, the radio manager is provided with logic to determine which acknowledgements in the queue, when transmitted, will likely result in the network responding to the acknowledgement. The logic may be part of the radio manager, or separate. In other implementations, the application corresponding to the particular acknowledgement indicates whether or not a response from the network is expected. Responses from the network may be dependent upon the particular application. For example, a web browser application may expect a response from the network in response to transmission of an acknowledgement packet, while other applications would not.

In some implementations, receipt of a response from the network has the effect of delaying the tearing down of the communication channel. This allows the transmission of other packets in the queue to be delayed, provided that their respective time windows permit so. Delaying the tearing down of the traffic channel may be done so many times in a row. For example, the method of Figure 16 may be repeated many times in sequence so as to keep the communication channel active.

In other embodiments, at least some acknowledgements in the queue are provided with a respective priority level. The priority levels may be provided to the radio manager by the respective application. Alternatively, the priority levels may be computed based on some logic. The logic may be part of the radio manager, or separate. Referring now to Figure 17, if the radio manager determines at step 17-1 that the communication channel is expected to be torn down, then at step 17-2 the radio manager sends a particular acknowledgement from the queue, the particular acknowledgement having a highest priority of all of the acknowledgements in the queue.

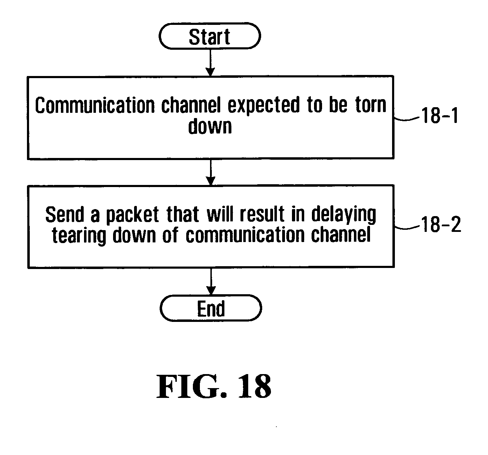

As previously described, in some implementations, sending a packet to which a response is expected soon before the communication channel is to be torn down delays the tearing down of the communication channel. Referring now to Figure 18, if the radio manager determines at step 18-1 that the communication channel is expected to be torn down, then at step 18-2 the radio manager sends a packet from the queue, wherein transmission of the packet has the effect of delaying the tearing down of the communication channel. Much like the method described with reference to Figure 16, the transmission of other packets in the queue to be delayed, provided that their respective time windows permit so, and the method of Figure 18 may be repeated in sequence so as to keep the communication channel active.

### Resource Utilization Estimation

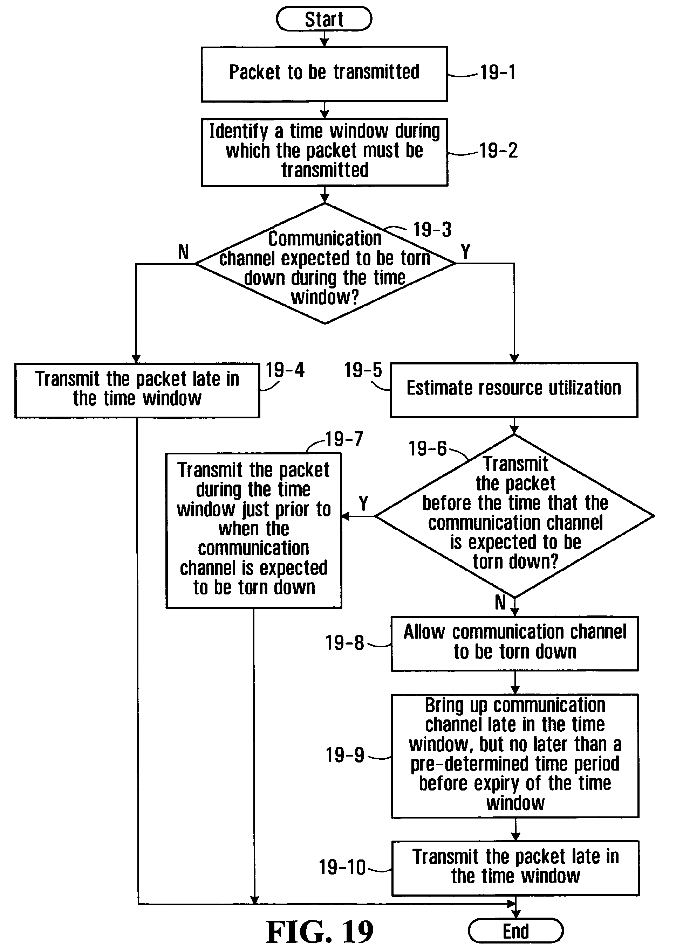

In the examples presented above, if the communication channel is expected to be torn down in the time window during which a packet must be transmitted, then the packet is transmitted before the communication channel is torn down. However, in other embodiments, the wireless device may allow the communication channel to be torn down and instead transmit the packet at some later time. The decision to allow the communication channel to be torn down can be based on estimated resource utilisation for transmitting the packet before and after the time that the communication channel is expected to be torn down. Referring now to Figure 19, shown is a flowchart of another example method of transmitting a packet. This method may be implemented in a wireless device, for example the wireless device 10 shown in Figure 1.

If at step 19-1 there is a packet to be transmitted, then at step 19-2 the wireless device identifies a time window during which the packet must be transmitted. The packet is to be transmitted late in the time window, but may be transmitted earlier if an earlier transmission is more favourable. At step 19-3, the wireless device determines whether or not the communication channel is expected to be torn down during the time window. If the communication channel is not expected to be torn down during the time window, then the wireless device transmits the packet late in the time window at step 19-4. However, if the communication channel is expected to be torn down during the time window, then at step 19-5 the wireless device estimates resource utilisation for transmitting the packet before and after the time that the communication channel is expected to be torn down. Based on the estimation, the wireless device determines at step 19-6 whether or not the packet should be transmitted before the time that the communication channel is expected to be torn down.

If the wireless device determines that the packet should be transmitted before the time that the communication channel is expected to be torn down, then at step 19-7 the wireless device transmits the packet during the time window just prior to the time that the communication channel is expected to be torn down. This prevents the wireless device from having to re-establish the communication channel to send the packet in the event that the communication channel is torn down. However, if the wireless device determines that the packet should be transmitted after the time that the communication channel is expected to be torn down, then at step 19-8 the wireless device allows the communication channel to be torn down without sending the packet. In the illustrated example, it is assumed that the communication channel is torn down as expected.

At step 19-9, the communication channel is brought up late in the time window, but no later than a predetermined time period before expiry of the time window. The predetermined time period allows time for the communication channel to be established and allows for the packet to be transmitted at step 19-10 before the time window expires.

In some implementations, the wireless device incorporates many considerations when estimating resource utilisation for transmitting the packet before and after the time that the communication channel is expected to be torn down. For example, the wireless device may consider the time window and when the communication channel is expected to be torn down. Transmitting a packet late in the time window may utilise fewer resources than transmitting the packet earlier. An example of this is the case of acknowledging received packets. As previously described, waiting until late in the time window to transmit a single acknowledgment packet to acknowledge receipt of more than one packet generally utilises fewer resources than transmitting a plurality of individual acknowledgment packets. However, there are instances when transmitting a packet late in the communication window may utilise more resources, for example if the communication channel is torn down and needs to be re-established. As another example, the wireless device may consider the state of the wireless device. Establishing the traffic channel while in a first state may utilise fewer resources than when in a second state. Other considerations are possible.

In some implementations, if the time window expires at a time that is much later than when the communication channel is expected to be torn down, then the wireless device determines that packet should be transmitted after the time that the communication channel is expected to be torn down. Likewise, if the time window expires at a time that is not much later than when the communication channel is expected to be torn down, then the wireless device determines that packet should be transmitted before the time that the communication channel is expected to be torn down. The quantity defining "much later" is implementation specific. In some implementations, a threshold value is defined for the quantity, for example 10 minutes. In other implementations, the threshold value is 2 minutes. Other implementations are possible.

It is to be understood that when estimating resources utilisation there may be several different types of resources that are considered. For example, any one or more of network resources, battery power of the wireless device, and time involved in establishing the communication channel may be considered.

### Bringing up the Communication Channel

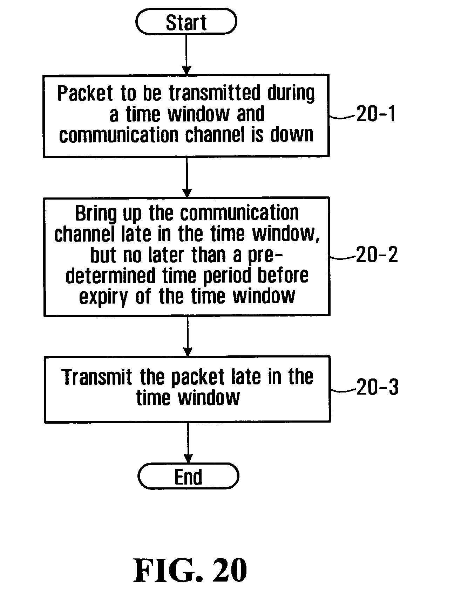

In the examples presented above, it is assumed that the communication channel is established when it is determined that there is a packet to be transmitted during a time window. However, in some instances, the communication channel is not established at such time. Referring now to Figure 20, shown is a flowchart of yet another example method of transmitting a packet. This method may be implemented in a wireless device, for example the wireless device 10 shown in Figure 1.

At step 20-1 the wireless device determines that there is a packet to be transmitted during a time window while the communication channel is down. At step 20-2 the communication channel is brought up late in the time window, but no later than a predetermined time period before expiry of the time window. The predetermined time period allows time for the communication channel to be established and allows for the packet to be transmitted at step 20-3 before the time window expires.

The time required to establish the traffic channel may be dependent on one or more factors. For example, establishing the traffic channel while the wireless device is in a first state may take longer than if the wireless device were in a second state. Accordingly, in some implementations, the predetermined time period is chosen appropriately to accommodate for such one or more factors. The predetermined time period may be fixed, or variable depending on the one or more factors.

Many example methods of transmitting a packet have been provided above with reference to the drawings. It is to be understood that these methods may be implemented individually, or in any appropriate combination. For example, the method described with reference to Figure 20 may be implemented in combination with the method described with reference to Figure 2. Other appropriate combinations are may be contemplated.
Numerous modifications and variations of the present application are possible in light of the above teachings. It is therefore to be understood that within the scope of the appended claims, the application may be practised otherwise than as specifically described herein.

## Claims

1. A method in a wireless device (10) comprising:
identifying (2-2) a time window during which a packet must be transmitted;
determining whether a communication channel is expected (2-3) to be torn down during the time window based on packet traffic over the communication channel; and
transmitting (2-4, 2-5) the packet on the communication channel at a time during the time window based on whether the communication channel is expected (2-3) to be torn down during the time window.

2. The method of claim 1 wherein the packet comprises:
an acknowledgement packet for acknowledging receipt of at least one previously received packet; or
a synchronisation packet for providing synchronisation information to a recipient of the packet.

3. The method of claim 1 or claim 2 wherein transmitting the packet comprises:
transmitting (2-4) the packet late in the time window if the communication channel is not expected (2-3) to be torn down during the time window.

4. The method of claim 1 or claim 2 wherein transmitting the packet comprises:
if the communication channel is expected (2-3) to be torn down during the time window, transmitting (2-5) the packet during the time window just prior to when the communication channel is expected to be torn down.

5. The method of any one of the preceding claims further comprising:
determining whether the packet is of a packet type that is to be transmitted late in the time window, but may be transmitted earlier.

6. The method of any one of the preceding claims further comprising:
receiving (3-1, 5-1) a first packet or a plurality of packets;
wherein the packet transmitted (3-3, 5-4) on the communication channel is generated in response to receipt of the first packet or the plurality of packets.

7. The method of claim 6 wherein the time window starts from receipt of the first packet (3-1, 5-1) and has a duration based on a deadline for responding to receipt of the first packet.

8. The method of claim 6 wherein the plurality of packets received (5-1, 5-3) comprise a last packet (5-3), the method further comprising:
for each of the plurality of packets received (5-1, 5-3), generating a respective response packet (5-2, 5-4) in response to the packet received, the response packets comprising a last response packet (5-4) generated in response to the last packet (5-3) received and at least one other response packet (5-2);
wherein the packet transmitted (5-4) is the last response packet (5-4), the last response packet being transmitted in lieu of the at least one other response packet (5-2).

9. The method of claim 6 or claim 8 wherein the plurality of packets received (5-1, 5-3) comprise a first packet (5-1), wherein the time window starts from receipt of the first packet received.

10. The method of any one of claims 1 to 5 wherein the packet transmitted is one packet of a plurality of packets to be transmitted in respect of a plurality of communications, each of the plurality of packets having a respective time window during which the packet must be transmitted, the method further comprising:
maintaining a queue for each of the plurality of packets and its respective time window.

11. The method of claim 10 further comprising:
adding (10-2) packets that are to be transmitted to the queue together with their respective time windows; and
removing (12-3) packets that have been transmitted from the queue together with their respective time windows.

12. The method of claim 10 or claim 11 further comprising:
if the communication channel is expected to be torn down, analyzing (13-2) the queue for transmitting at least one of the plurality of packets.

13. The method of claim 12 wherein analyzing (13-2) the queue for transmitting at least one of the plurality of packets comprises any one or any combination of:
transmitting (14-2) all of the plurality of packets stored in the queue before the communication channel is torn down;
transmitting (15-2) an oldest packet of the plurality of packets stored in the queue, the respective time window of the oldest packet expiring before any other respective time window;
transmitting (16-2) a particular packet of the plurality of packets stored in the queue, wherein a response packet is expected to be received in response to transmission of the particular packet;
transmitting (17-2) a highest priority packet of the plurality of packets stored in the queue, the highest priority packet having a priority level greater than or equal to those of other packets in the queue; and/or
transmitting (18-2) a delaying packet of the plurality of packets stored in the queue, wherein transmission of the delaying packet causes tearing down of the communication channel to be delayed.

14. The method of any one of the preceding claims wherein the communication channel is a physical layer traffic channel.

15. The method of any one of the preceding claims implemented co-operatively by a radio manager (20) and at least one application (11, 12, 13), the method further comprising:
the at least one application (11, 12, 13) providing (7-3) the radio manager (20) with the packet to be transmitted together with an indication of the time window during which the packet must be transmitted; and
the radio manager (20) managing (12-2, 13-2) transmission of the packet.

16. A computer readable medium (11, 12, 13, 20) having computer readable instructions stored thereon for execution on a wireless device (10) so as to implement the method of any one of claims 1 to 15.

17. A wireless device (10) comprising means adapted to implement the method of any one of claims 1 to 15.

18. The wireless device (10) of claim 17 comprising:
a wireless access radio (30) adapted to communicate wirelessly (50) with a wireless access network (60);
a radio manager (20) for managing (12-2, 13-2) packet transmission on the wireless access radio (30); and
at least one application (11, 12, 13) coupled to the radio manager (20);
wherein:
the at least one application (11, 12, 13) provides (7-3) the packet to be transmitted to the radio manager (20) together with an indication of the time window; and
the radio manager (20) manages (12-2, 13-2) transmission of the packet.

19. A communication system (10, 60) comprising a plurality of wireless devices (10) according to claim 17 or claim 18.

## Patentansprüche

1. Ein Verfahren in einem drahtlosen Gerät (10) mit den Schritten:
Identifizieren (2-2) eines Zeitfensters währenddessen ein Paket übertragen werden muss;
Bestimmen, ob zu erwarten ist (2-3), dass ein Kommunikationskanal während des Zeitfensters zusammenbricht, basierend auf Paketverkehr über den Kommunikationskanal;
Übertragen (2-4, 2-5) des Paketes über den Kommunikationskanal zu einer Zeit während des Zeitfensters, basierend darauf, ob zu erwarten ist (2-3), dass der Kommunikationskanal während des Zeitfensters zusammenbricht.

2. Das Verfahren gemäß Anspruch 1 wobei das Paket umfasst:
ein Bestätigungspaket zum Bestätigen des Empfangs zumindest eines zuvor empfangenen Pakets; oder
ein Synchronisationspaket um einem Empfänger des Paketes Synchronisationsinformation bereitzustellen.

3. Das Verfahren gemäß Anspruch 1 oder Anspruch 2 wobei das Übertragen des Paketes umfasst:
Übertragen (2-4) des Paketes spät im Zeitfenster, falls nicht zu erwarten ist (2-3), dass der Kommunikationskanal während des Zeitfensters zusammenbricht.

4. Das Verfahren gemäß Anspruch 1 oder Anspruch 2 wobei das Übertragen des Paketes umfasst:
Übertragen (2-5) des Pakets während des Zeitfensters kurz bevor zu erwarten ist, dass der Kommunikationskanal zusammenbricht, falls zu erwarten ist (2-3), dass der Kommunikationskanal während des Zeitfensters zusammenbricht;

5. Das Verfahren gemäß einem der vorhergehenden Ansprüche mit dem weiteren Schritt:
Bestimmen ob das Paket einem Pakettyp zugeordnet ist, welcher spät im Zeitfenster zu übertragen ist, aber früher übertragen werden kann.

6. Das Verfahren gemäß einem der vorhergehenden Ansprüche mit dem weiteren Schritt:
Empfangen (3-1, 5-1) eines ersten Paketes oder mehrerer Pakete;
wobei das über den Kommunikationskanal übertragene (3-3, 5-4) Paket als Antwort auf das Empfangen des ersten Paketes oder der mehreren Pakete generiert wird.

7. Das Verfahren gemäß Anspruch 6 wobei das Zeitfenster mit dem Empfang des ersten Paketes (3-1, 3-5) startet und eine auf der Frist zum Beantworten des Empfanges des ersten Paketes basierende Dauer hat.

8. Das Verfahren gemäß Anspruch 6, wobei die mehreren empfangenen Pakete (5-1, 5-3) ein letztes Paket (5-3) umfassen, mit den Schritten:
Generieren eines entsprechenden Antwortpaketes (5-2, 5-4) als Antwort auf das empfangene Paket für jedes der empfangenen mehreren Pakete (5-1, 5-3), wobei die Antwortpakete zumindest ein letztes Antwortpaket (5-4), welches als Antwort auf das letzte empfangene Paket (5-3) generiert worden ist, und zumindest ein anderes Antwortpaket (5-2), umfassen;
wobei das übertragene Paket (5-4) das letzte Antwortpaket (5-4) ist, welches anstatt des zumindest einen anderen empfangenen Antwortpaketes (5-2) übertragen wird.

9. Das Verfahren gemäß Anspruch 6 oder Anspruch 8, wobei die mehreren empfangenen Pakete (5-1, 5-3) ein erstes Paket (5-1) umfassen, wobei das Zeitfenster mit dem Empfang des ersten empfangenen Paketes begi n nt.

10. Das Verfahren gemäß Anspruch 1 bis 5 wobei das übertragene Paket eines der mehreren Pakete, welche in Bezug auf mehrere Verbindungen übertragen werden, ist, wobei jedes der mehreren Pakete ein Zeitfenster hat während dessen das Paket übertragen werden muss, mit dem weiteren Schritt:
Aufrechterhalten einer Abarbeitungsreihenfolge für jedes der mehreren Pakte und seines Zeitfensters.

11. Das Verfahren gemäß Anspruch 10 mit den weiteren Schritten:
Hinzufügen (10-2) von Paketen, welche übertragen werden müssen, zusammen mit ihren Zeitfenstern zur Abarbeitungsreihenfolge. Entfernen (12-3) von Paketen, welche übertragen worden sind, von der Abarbeitungsreihenfolge zusammen mit ihren Zeitfenstern.

12. Das Verfahren gemäß Anspruch 10 oder Anspruch 11 mit dem weiteren Schritt:
Analysieren (13-2) der Abarbeitungsreihenfolge zum Übertragen zumindest eines der mehreren Pakete, falls zu erwarten ist, dass der Kommunikationskanal zusammenbricht.

13. Das Verfahren gemäß Anspruch 12, wobei das Analysieren (13-2) der Abarbeitungsreihenfolge um zumindest eines der mehreren Pakete zu übertragen irgendeinen oder irgendeine Kombination der nachfolgenden Schritte enthält:
Übertragen (14-2) aller der mehreren Pakete, welche in der Abarbeitungsreihenfolge gespeichert sind, bevor der Kommunikationskanal zusammenbricht;
Übertragen (15-2) eines ältesten Paketes der mehreren Pakete, welche in der Abarbeitungsreihenfolge gespeichert sind, wobei das Zeitfenster des ältesten Paketes vor allen anderen Zeitfenstern abläuft;
Übertragen (16-2) eines speziellen Paketes der mehreren Pakete, welche in der Abarbeitungsreihenfolge gespeichert sind, wobei zu erwarten ist, dass ein Antwortpaket als Antwort auf das Übertragen des speziellen Paketes empfangen wird;
Übertragen (17-2) eines höchstprioren Paketes der mehreren Pakete, welche in der Abarbeitungsreihenfolge gespeichert sind, wobei das höchstpriore Paket einen höheren oder einen gleichen Prioritätsgrad hat wie die anderen Pakete in der Abarbeitungsreihenfolge; und/oder Übertragen (18-2) eines Verzögerungspaketes der mehreren Pakete, welche in der Abarbeitungsreihenfolge gespeichert sind, wobei das Übertragen des Verzögerungspaketes dazu führt, dass das Zusammenbrechen des Kommunikationskanals verzögert wird.

14. Das Verfahren gemäß einem der vorhergehenden Ansprüche, wobei der Kommunikationskanal ein Physical Layer Traffic Channel ist.

15. Das Verfahren gemäß einem der vorhergehenden Ansprüche wobei das Verfahren von einem Radio Manager (20) zusammen mit zumindest einer Anwendung (11, 12, 13) implementiert wird, und das Verfahren ferner die folgenden Schritte umfasst:
die zumindest eine Anwendung (11, 12, 13) versorgt (7-3) den Radio Manager (20) mit dem Paket, welches zusammen mit einer Angabe des Zeitfensters, während dessen das Paket gesendet werden muss, zu senden ist; und
Managen (12-2, 12-3) der Übertragung des Paketes durch den Radio Manager (20).

16. Ein computerlesbares Speichermedium (11, 12, 13, 20) mit darauf gespeicherten computerlesbaren Anweisungen zur Ausführung auf einem drahtlosen Gerät (10) zur Implementierung einer Methode gemäß den Ansprüchen 1 bis 15.

17. Ein drahtloses Gerät (10) ausgestattet mit Mitteln, welche darauf ausgerichtet sind eines der Verfahren gemäß den Ansprüchen 1 bis 15 zu implementieren.

18. Das drahtlose Gerät (10) gemäß Anspruch 17 umfassend:
ein Wireless Access Radio (30), das darauf ausgerichtet ist, drahtlos mit einem Wireless Access Network (60) zu kommunizieren (50).
ein Radio Manager (20) zum Managen (12-2, 13-2) der Paketübertragung auf dem Wireless Access Radio (30);
zumindest eine Anwendung (11, 12, 13) verbunden mit dem Radio Manager (20); wobei:
die zumindest eine Anwendung (11, 12, 13) den Radio Manger (20) mit dem zu übertragenden Paket zusammen mit einer Angabe des Zeitfensters versorgt (7-3); und
der Radio Manager (20) die Übertragung des Paketes managt (12-2, 13-2).

19. Ein Kommunikationssystem (10, 60) umfassend mehrere drahtlose Geräte (10) gemäß Anspruch 17 oder Anspruch 18.

## Revendications

1. Procédé sur un dispositif sans fil (10), comprenant les étapes consistant à :
identifier (2-2) une fenêtre temporelle au cours de laquelle un paquet doit être émis ;
déterminer s'il est prévu (2-3) qu'un canal de communication sera fermé pendant la fenêtre temporelle, en fonction du trafic de paquets sur le canal de communication ; et
émettre (2-4, 2-5) le paquet sur le canal de communication à un instant pendant la fenêtre temporelle, suivant qu'il est prévu (2-3) ou non que le canal de communication sera fermé pendant la fenêtre temporelle.

2. Procédé selon la revendication 1, dans lequel le paquet comprend :
un paquet d'accusé de réception destiné à accuser réception d'au moins un paquet reçu précédemment ; ou
un paquet de synchronisation, destiné à fournir des informations de synchronisation à un destinataire du paquet.

3. Procédé selon la revendication 1 ou la revendication 2, dans lequel l'étape d'émission du paquet comprend l'étape consistant à :
émettre (2-4) le paquet tardivement dans la fenêtre temporelle s'il est prévu (2-3) que le canal de communication ne sera pas fermé pendant la fenêtre temporelle.

4. Procédé selon la revendication 1 ou la revendication 2, dans lequel l'étape d'émission du paquet comprend l'étape consistant à :
s'il est prévu (2-3) que le canal de communication sera fermé pendant la fenêtre temporelle, émettre (2-5) le paquet dans la fenêtre temporelle juste avant l'instant où il est prévu que le canal de communication sera fermé.

5. Procédé selon l'une quelconque des revendications précédentes, comprenant en outre l'étape consistant à :
déterminer si le paquet est un type de paquet qui doit être émis tardivement dans la fenêtre temporelle mais qui peut être émis plus tôt.

6. Procédé selon l'une quelconque des revendications précédentes, comprenant en outre l'étape consistant à :
recevoir (3-1, 5-1) un premier paquet ou une pluralité de paquets ;
dans lequel le paquet émis (3-3, 5-4) sur le canal de communication est produit en réponse à la réception du premier paquet ou de la pluralité de paquets.

7. Procédé selon la revendication 6, dans lequel la fenêtre temporelle débute à la réception du premier paquet (3-1, 5-1) et a une durée fondée sur un délai de réponse à la réception du premier paquet.

8. Procédé selon la revendication 6, dans lequel la pluralité de paquets reçus (5-1, 5-3) comprend un dernier paquet (5-3), le procédé comprenant en outre l'étape consistant à :
pour chacun des paquets dans la pluralité de paquets reçus (5-1, 5-3), produire un paquet de réponse (5-2, 5-4) respectif en réponse au paquet reçu, les paquets de réponse comprenant un dernier paquet de réponse (5-4) produit en réponse au dernier paquet (5-3) reçu et au moins un autre paquet de réponse (5-2) ;
dans lequel le paquet émis (5-4) est le dernier paquet de réponse (5-4), le dernier paquet de réponse étant émis à la place dudit au moins un autre paquet de réponse (5-2).

9. Procédé selon la revendication 6 ou la revendication 8, dans lequel la pluralité de paquets reçus (5-1, 5-3) comprend un premier paquet (5-1), dans lequel la fenêtre temporelle débute de la réception du premier paquet reçu.

10. Procédé selon l'une quelconque des revendications 1 à 5, dans lequel le paquet émis est un paquet parmi une pluralité de paquets à émettre pour correspondre à une pluralité de communications, chacun des paquets parmi la pluralité de paquets ayant une fenêtre temporelle respective pendant laquelle le paquet doit être émis, le procédé comprenant en outre l'étape consistant à :
gérer une file d'attente pour chaque paquet parmi la pluralité de paquets ainsi que pour sa fenêtre temporelle respective.

11. Procédé selon la revendication 10, comprenant en outre les étapes consistant à :
ajouter (10-2) à la file d'attente des paquets à émettre avec leurs fenêtres temporelles respectives ; et
supprimer (12-3) dans la file d'attente des paquets qui ont été émis ainsi que leurs fenêtres temporelles respectives.

12. Procédé selon la revendication 10 ou 11, comprenant en outre l'étape consistant à :
s'il est prévu que le canal de communication sera fermé, analyser (13-2) la file d'attente pour émettre au moins un paquet sur la pluralité de paquets.

13. Procédé selon la revendication 12, dans lequel l'étape d'analyse (13-2) de la file d'attente pour émettre au moins un paquet sur la pluralité de paquets comprend l'une quelconque des étapes suivantes ou une combinaison quelconque de celles-ci :
émettre (14-2) la totalité de la pluralité de paquets stockées dans la file d'attente avant que le canal de communication soit fermé ;
émettre (15-2) un paquet le plus ancien dans la pluralité de paquets stockés dans la file d'attente, la fenêtre temporelle respective du paquet le plus ancien expirant avant toutes les autres fenêtres temporelles respectives ;
émettre (16-2) un paquet particulier parmi la pluralité de paquets stockés dans la file d'attente, la réception d'un paquet de réponse étant attendue en réponse à l'émission du paquet particulier ;
émettre (17-2) un paquet de priorité maximale parmi la pluralité de paquets stockés dans la file d'attente, le paquet de priorité maximale ayant un niveau de priorité supérieur ou égal à celui d'autres paquets dans la file d'attente ; et/ou
émettre (18-2) un paquet de retardement parmi la pluralité de paquets stockés dans la file d'attente, l'émission du paquet de retardement commandant le retardement de la fermeture du canal de communication.

14. Procédé selon l'une quelconque des revendications précédentes, dans lequel le canal de communication est un canal de trafic de la couche physique.

15. Procédé selon l'une quelconque des revendications précédentes, mis en oeuvre de manière coopérative par un gestionnaire radio (20) et au moins une application (11, 12, 13), le procédé comprenant en outre les étapes consistant à :
fournir (7-3) le paquet à émettre au gestionnaire radio (20) par ladite au moins une application (11, 12, 13), avec une indication de la fenêtre temporelle pendant laquelle le paquet doit être émis ; et
gérer (12-2, 13-2) l'émission du paquet par le gestionnaire radio (20).

16. Support lisible par ordinateur (11, 12, 13, 20) portant stockées des instructions lisibles par ordinateur destinées à être exécutées sur un dispositif sans fil (10) afin de mettre en oeuvre le procédé selon l'une quelconque des revendications 1 à 15.

17. Dispositif sans fil (10) comprenant un moyen conçu pour mettre en oeuvre le procédé selon l'une quelconque des revendications 1 à 15.

18. Dispositif sans fil (10) selon la revendication 17, comprenant :
une radio d'accès sans fil (30) conçue pour communiquer par sans fil (50) avec un réseau d'accès sans fil (60) ;
un gestionnaire radio (20) destiné à gérer (12-2, 13-2) l'émission des paquets sur la radio d'accès sans fil (30) ; et
au moins une application (11, 12, 13) couplée au gestionnaire radio (20) ;
dans lequel :
ladite au moins une application (11, 12, 13) fournit (7-3) le paquet à émettre au gestionnaire radio (20), avec une indication de la fenêtre temporelle ; et
le gestionnaire radio (20) gère (12-2, 13-2) l'émission du paquet.

19. Système de communication (10, 60) comprenant une pluralité de dispositifs sans fil (10) selon la revendication 17 ou la revendication 18.
